# EUROPÄISCHE PATENTSCHRIFT

(11) **EP 0 992 967 B1**
(45) Veröffentlichungstag und Bekanntmachung des Hinweises auf die Patenterteilung: **28.03.2012**
(21) Anmeldenummer: 99118147.0
(22) Anmeldetag: 11.09.1999
(51) Int. Cl.: G09B 9/46, G09B 9/32, G09B 9/14

(54) **Übungssimulator**
Training simulator
Simulateur d'entraînement

(30) Priorität: 08.10.1998 DE 19846337
(43) Veröffentlichungstag der Anmeldung: 12.04.2000
(73) Patentinhaber: Rheinmetall Defence Electronics GmbH, 28309 Bremen (DE)
(72) Erfinder: Lünsmann, Udo, 27283 Verden (DE); Sieglin, Henning, 28717 Bremen (DE); Winkler, Gerd, 28355 Bremen (DE)
(74) Vertreter: Thul, Hermann

(56) Entgegenhaltungen:
- EP-B- 0 576 427
- WO-A-96/04636
- US-A- 3 295 224
- US-A- 5 437 756

## Beschreibung

Die Erfindung betrifft einen Übungssimulator zum Trainieren von Fahrzeugführen in der Fahrzeugführung, insbesondere von Piloten im Hubschrauberfliegen, der im Oberbegriff des Anspruch 1 definierten Gattung.

Bei einem bekannten Simulator dieser Art (WO 96/04636) ist die sowohl den Fahrstand als auch einen Ausbilderplatz unmittelbar aufnehmende Plattform als Zwischendeck einer allseits geschlossenen Kunststoffkapsel ausgebildet, die sich teilweise in den zwischen den Tragbeinen des Bewegungssystems verbleibenden Freiraum hinein erstreckt und in diesen Bereich so geformt ist, daß sie zu keinem Bewegungszeitpunkt gegen die Tragbeine stößt. Auf diese Weise wird zwischen dem Zwischendeck und dem unteren Boden der Kapsel ein Freiraum geschaffen, in dem Ballastelemente, z.B. schwere Ausrüstungsgegenstände oder zusätzliche Flüssigkeitstanks, angeordnet sind, um den Schwerpunkt des von dem Bewegungssystem getragenen Teils des Simulators niedrig zu legen, vorzugsweise in die Plattform bzw. das Zwischendeck selbst. Die abgesenkte Schwerpunktlage ermöglicht hohe Beschleunigungs- und Bewegungskräfte bei kurzen Ansprechzeiten der Steuer- und Antriebsmittel und eine relativ leichte Konstruktion des Bewegungssystems.

In der Frontseite der Kapsel ist ein Fenster für die Sicht des Fahrzeugführers auf den mit der Kapsel fest verbundenen, gekrümmten Projektionsschirm vorgesehen, der sich an der Frontseite der Kapsel über etwa 180° erstreckt. Dieses Fenster ermöglicht einen Sichtwinkel des Fahrzeugführers von seinem Sitzplatz im Fahrstand aus auf den Projektionsschirm von vertikal ca. 40°. Entsprechend wird die Umgebungssicht für einen Blickwinkel von 40° vertikal und 180° horizontal auf den Projektionsschirm dargestellt.

Bei manchen Fahrzeugen, insbesondere bei Hubschraubern, besteht die Forderung, daß der Fahrzeugführer von seiner Sitzposition aus auch seitwärts, links und rechts nach unten sehen können muß. Demzufolge muß im Übungssimulator ein Sichtwinkel des Fahrzeugführers auf den Projektionsschirm nach unten realisiert werden, der unter Umständen bis zu 60°, ausgehend von einer durch den Augenpunkt des Fahrzeugführers verlaufenden Horizontalebene, betragen kann. Eine solche Sicht nach unten wurde bisher dadurch realisiert, daß der Augenpunkt des seine Sitzposition zur Fahrzeugführung einnehmenden Fahrzeugführers so weit nach oben verlagert wurde, bis sich bei unverändert vorgegebenem, radialem Abstand zum Projektionsschirm ein solcher Blickwinkel einstellt. Hierzu wurde der Fahrstand auf ein entsprechend hohes Podest gesetzt, das auf der Plattform befestigt war. Als Folge des nunmehr nach oben gewanderten Schwerpunktes des von dem Bewegungssystem getragenen Teils des Simulators, mußte zur Erzielung ausreichender dynamischer Bewegungsparameter das Bewegungssystem stark und leistungsintensiv ausgelegt, die Plattform zur Einleitung der dynamischen Kräfte in den Fahrstand kräftig dimensioniert und eine große hydraulische und/oder elektrische Leistungsversorgung vorgesehen werden. Außerdem erfordert der Simulator am Aufstellplatz eine große Fundamentstabilität und eine recht große Deckenhöhe.

Der Erfindung liegt die Aufgabe zugrunde, in einem Übungssimulator der eingangs genannten Art dem Fahrzeugführer bei durch die unmittelbare Anordnung des Fahrstandes auf der Plattform minimierter Augenpunkthöhe einen für die Fahrzeugführung geforderten Sichtwinkel nach unten auf den Projektionsschirm zu ermöglichen, ohne den radialen Abstand des Projektionsschirms unangemessen vergrößern zu müssen.

Die Aufgabe ist durch die Merkmale des Patentanspruchs 1 gelöst.

Der erfindungsgemäße Übungssimulator hat den Vorteil, daß der Fahrstand unmittelbar auf der Plattform angeordnet ist und der den Projektionsschirm bildenden Dom durch "Überstülpen" über die Plattform mit Fahrstand nach unten verlagert wird. Dadurch wird nicht nur bei minimierter Augenpunkthöhe ein Sichtwinkel nach unten auf den Projektionsschirm ermöglicht, sondern auch der Schwerpunkt des vom Bewegungssystem getragenen Teils des Simulators tiefgelegt und die Masse des bewegten Teils besser verteilt, so daß bei gleichen Dynamikdaten ein kleineres Bewegungssystem zum Einsatz kommen kann, das bei geringerer Leistungsaufnahme eine verbesserte Wirtschaftlichkeit bietet. Die Gesamthöhe des Simulators fällt deutlich geringer aus, so daß die Anforderungen an die Dimensionen des Aufstellortes reduziert werden können.

Zweckmäßige Ausführungsformen des erfindungsgemäßen Übungssimulators mit vorteilhaften Weiterbildungen und Ausgestaltungen der Erfindung ergeben sich aus den weiteren Ansprüchen:

Gemäß einer vorteilhaften Ausführungsform der Erfindung weist das Fundament zur Aufnahme des Bewegungssystems eine Erhebung auf, deren Außendurchmesser kleiner ist als der lichte Durchmesser des unteren Öffnungsrandes des Doms und dessen plane Oberfläche die fundamentseitigen Gelenke der Tragbeine des Bewegungssytems aufnimmt. Durch diese Fundamenterhebung können die längenverstellbaren Tragbeine des Bewegungssystems kürzer und damit weniger steif und leichter ausgeführt werden, ohne daß die Bewegungsfreiheit des bewegten Teils des Simulators eingeschränkt wird.

Gemäß einer vorteilhaften Ausführungsform der Erfindung sind zur Darstellung der Umgebungssicht auf dem Dom mindestens zwei Projektoren vorgesehen, von denen der eine Projektor den unterhalb der durch den Augenpunkt verlaufenden Horizontalebene liegenden Dombereich und der andere Projektor den oberhalb dieser Horizontalebene liegenden Dombereich ausleuchtet. Die Aufteilung der darzustellenden Umgebungssicht auf zwei vertikal zusammengesetzten Teilbilder, ermöglicht die Projektion der Umgebungssicht in Vertikalrichtung mit herkömmlichen Projektionsobjektiven, selbst bei einem kleinen Kugeldurchmesser des Doms.

Wenn gemäß einer weiteren Ausführungsform der Erfindung der den unteren Dombereich ausleuchtende Projektor oberhalb des Fahrstandes und der den oberen Dombereich ausleuchtende Projektor am Fuße des Fahrstandes an der Plattform angeordnet ist, so wird innerhalb des Doms nicht nur ein ausreichend großer Projektionsabstand der Projektoren vom Projektionsschirm erhalten, sondern auch durch die Anordnung eines Teils der relativ schweren Projektoren an der Plattform eine gute Gewichtsverteilung mit tiefliegendem Schwerpunkt der bewegten Masse erzielt.

Die Erfindung ist anhand eines in der Zeichnung dargestellten Ausführungsbeispiels im folgenden näher beschrieben. Es zeigen jeweils in schematischer Darstellung:
- Fig. 1: eine perspektivische Darstellung eines Übungssimulators zum Trainieren von Piloten im Hubschrauberfliegen,
- Fig. 2: einen Schnitt längs der Linie II - II in Fig. 1,
- Fig. 3: einen modifizierten Übungssimulator im Schnittbild gemäß Schnittlinie III - III in Fig. 1.

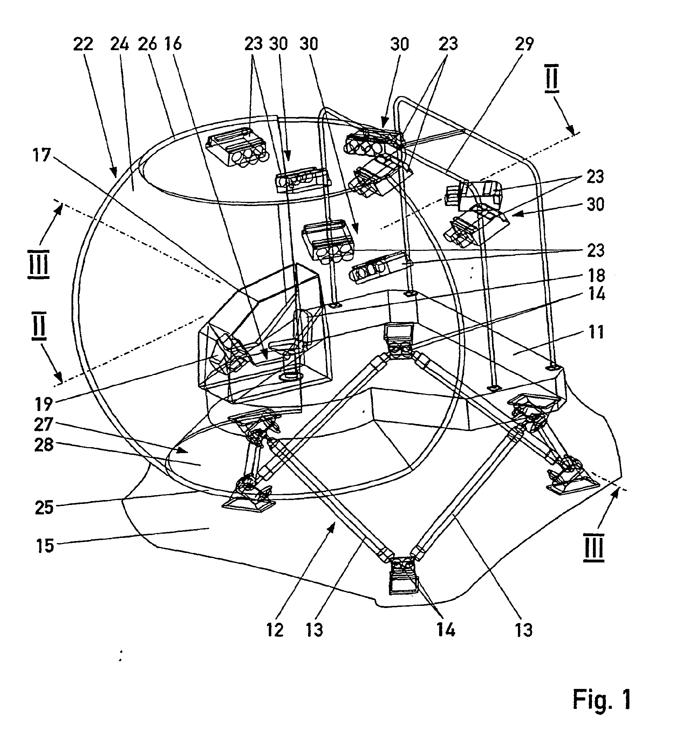

Der in Fig. 1 schematisiert perspektivisch dargestellte Übungssimulator zum Trainieren von Piloten im Hubschrauberfliegen, kurz Hubschraubersimulator genannt, als Ausführungsbeispiel für einen Übungssimulatoren zum Trainieren von Fahrzeugführern beliebiger Luft- und Landfahrzeuge, weist eine Plattform 11 auf, die von einem Bewegungssystem 12 getragen und zur dreidimensionalen Bewegung angetrieben ist. Das Bewegungssytem 12 umfaßt in bekannter Weise sechs aktiv längenverstellbare Tragbeine 13, die über Gelenke 14 mit drei Freiheitsgraden einerseits an der Plattform 11 auf deren Unterseite und andererseits an einem Fundament 15 festgelegt sind. Dabei sind jeweils zwei Gelenke 14 in einem Fußpunkt vereinigt, so daß das Bewegungssystem 12 insgesamt an jeweils drei in den Eckpunkten eines Dreiecks liegenden Punkten an der Plattform 11 und an dem Fundament 15 angreift. Hier nicht dargestellte Antriebsmittel verändern nach vorgegebenen Steueralgorithmen die momentane Länge der einzelnen Tragbeine 13, um an der Plattform 11 die Bewegung eines Hubschraubers nachzubilden.

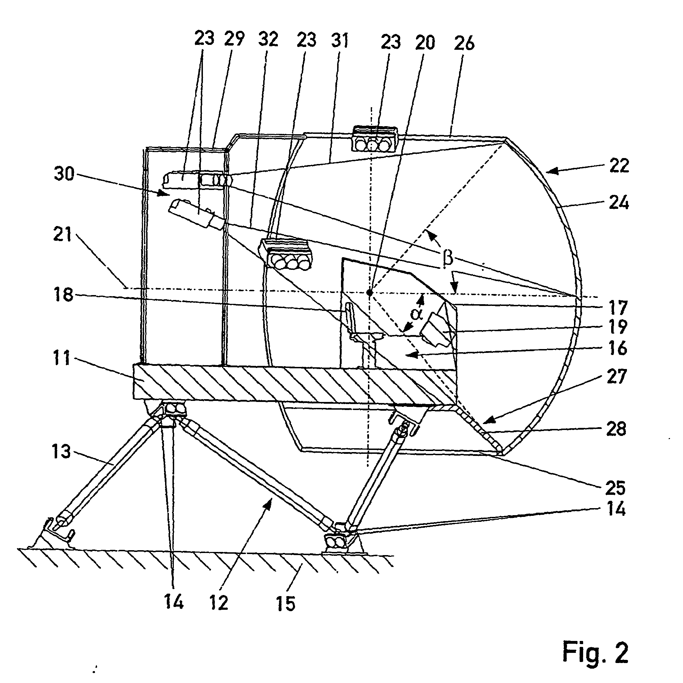

Unmittelbar auf der Oberseite der Plattform 11 ist der Fahrstand 16 für den Fahrzeugfüher bzw. Piloten fest angeordnet, der in eine Fahrzeugkabine 17 bzw. Pilotenkanzel integriert ist. Der Fahrstand 16 umfaßt einen Sitz 18 und eine Anzeige- und Instrumentenkonsole 19 sowie hier nicht dargestellte manuelle Betätigungsmittel zum Steuern des Fahrzeuges bzw. des Hubschraubers. Die Fahrzeugkabine 17 gestattet eine Sicht des auf dem Sitz 18 plazierten Fahrzeugführers oder Piloten nach vorn, nach schräg oben, zu beiden Seiten und seitwärts schräg nach oben über einen Kopfdrehbereich von ca. 210°, sowie zusätzlich auf beiden Seiten schräg nach unten über den gleichen Kopfdrehbereich, wobei lediglich die Sicht nach vorn unten durch die Fahrzeugkabine 17 im Bereich der Konsole 19 abgedeckt ist. In diesem Sichtbereich des Fahrzeugführers ist ein Projektionsschirm 22 aufgespannt, auf dem mittels Projektoren 23 eine Umgebungssicht für den Fahrzeugführer projiziert wird. Der Augenpunkt des auf den Sitz 18 plazierten Fahrzeugführers ist in Fig. 2 mit 20 und eine durch den Augenpunkt 20 verlaufende Horizontalebene mit 21 gekennzeichnet.

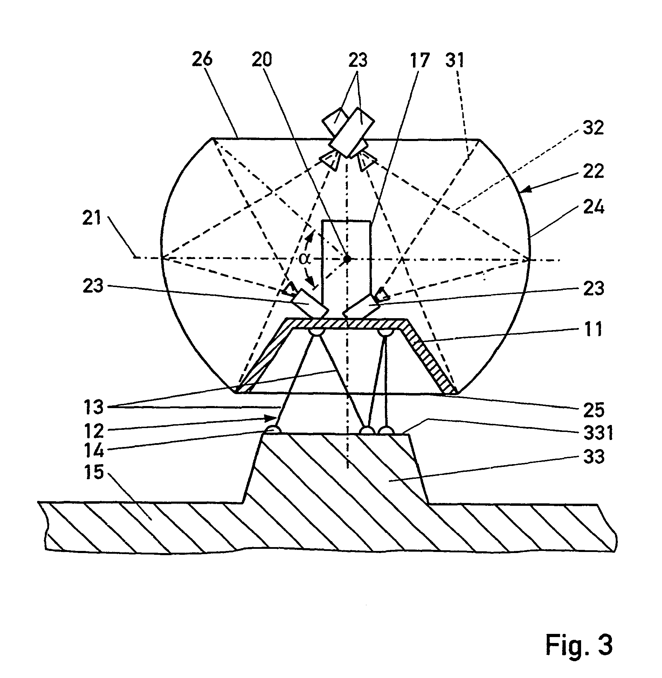

Der Projektionsschirm 22 ist von einem kugelabschnittförmigen Dom 24 gebildet, der einen unteren Öffnungsrand 25 und einen oberen Öffnungsrand 26 besitzt, wobei sich die beiden Öffnungsränder 25, 26 entsprechend dem unvollständigen, auf der Rückseite der Fahrzeugkabine 17 ausgesparten Kugelabschnitt über jeweils ca. 210° Umfangswinkel erstrecken. Die etwa 150° betragende Aussparung im Dom 24 ermöglicht den Zutritt zur Fahrzeugkabine 17 und zum Fahrstand 16. Der rückseitig ausgesparte kugelabschnittförmige Dom 24 ist über die Plattform 11 mit Fahrstand 16 und Fahrzeugkabine 17 übergestülpt und steht über diese nach unten so weit vor, daß bei minimiertem Vertikalabstand des Augenpunktes 20 von der Plattform 11 ein gewünschter großer Sichtwinkel von beispielsweise ca. 50° bis 60° unterhalb der durch den Augenpunkt 20 verlaufenden Horizontalebene 21 auf den Dom 24 gegeben ist. Zur Befestigung des Doms 24 an der Plattform 11 strebt ein an der Plattform 11 festgelegter Halter 27 nach unten weg, wobei er sich trichter- oder schirmartig aufweitet. Die Höhe und Aufweitung des Halters 27 ist dabei so bemessen, daß er in keiner Position der bewegten Plattform 11 das Bewegungssystem 12 touchiert, also zu keinem Zeitpunkt der Bewegung der Plattform 11 eines der Tragbeine 13 des Bewegungssystem 12 berührt. Der Dom 24 ist nunmehr mit seinem unteren Öffnungsrand 25 im unteren Bereich des Halters 27 befestigt. Im Ausführungsbeispiel der Fig. 1 und 2 ist der Halter 27 von einem an der Plattform 11 befestigten, über die Länge des unteren Öffnungsrandes 25 des Doms 24 sich erstreckenden, kegelstumpfförmigen Kragen 28 gebildet, der geschlossenflächig ausgeführt ist. Alternativ kann der Kragen 28 auch als Streben- oder Gitterkonstruktion ausgebildet werden, deren Gitterstreben sich in der kegelstumpfförmigen Mantelfläche des Kragens 28 erstrecken. Der Kragen 28 ist an der Unterseite der Plattform 11 befestigt, kann aber auch einstückig mit der Plattform 11 ausgeführt sein, so daß die Plattform 11 selbst einen Kegelstumpf bildet, wie dies in Fig. 3 zu sehen ist. Die vertikale Höhe des Doms 24 ist bei einem Sichtwinkel von 50° bis 60° nach unten so bemessen, daß ein Sichtwinkel des Fahrers auf den Dom 24 von mindestens 40° oberhalb der durch den Augenpunkt 20 verlaufenden Horizontalebene 21 gegeben ist. Die beiden Sichtwinkel des Fahrzeugführers nach unten und oben auf den Dom 24 sind in Fig. 4 schematisch durch α und β gekennzeichnet. Der Dom 24 ist bzgl. der Plattform 11 so ausgerichtet, daß sich der Augenpunkt 20 des Fahrzeugführers etwa im Kugelzentrum des kugelabschnittförmigen Doms 24 befindet.

Zur Darstellung der Umgebungssicht auf den Dom 24 sind die insgesamt acht oberhalb der Fahrzeugkabine 17 an einem mit der Plattform 11 fest verbundenen Traggestell 29 angeordneten Projektoren 23 zu vier Projektorpaaren 30 zusammengefaßt, die so angeordnet und ausgerichtet sind, daß sie in Umfangsrichtung benachbarte, vertikale Domabschnitte überlappend ausleuchten. Wie in Fig. 2 dargestellt ist, leuchtet dabei innerhalb eines jeden Domabschnitts der eine Projektor 23 den unterhalb der Horizontalebene 21 liegenden Bereich und der andere Projektor 23 den oberhalb der Horizontalebene 21 liegenden Bereich aus. Zur Verdeutlichung der Ausleuchtbereiche ist in Fig. 2 der Projektionskegel der Projektoren 23 eines Projektorpaares 30 mit 31 und 32 gekennzeichnet.

Der in Fig. 3 im Schnittbild gemäß Schnittlinie III-III in Fig. 1 schematisch dargestellte Hubschraubersimulator gemäß einem weiteren Ausführungsbeispiel ist gegenüber dem in Fig. 1 und 2 dargestellten und vorstehend beschriebenen Hubschraubersimulator in einigen Punkten modifiziert, stimmt aber im wesentlichen mit diesem Hubschraubersimulator überein, so daß gleiche Bauteile mit gleichen Bezugszeichen gekennzeichnet sind. Eine der Modifikationen besteht darin, daß das Bewegungssystem 12 fundamentseitig auf einer Fundamenterhebung 33 montiert ist, deren plane Oberfläche 331 die fundamentseitigen Gelenke 14 des Bewegungssystems 12 aufnimmt. Der Außendurchmesser der Fundamenterhebung 33 ist dabei kleiner gemacht als der lichte Durchmesser des unteren Öffnungsrandes 25 des Doms 24, um Berühungen des Doms 24 mit der Fundamenterhebung 33 während der Plattformbewegung zu verhindern. Durch diese Fundamenterhebung 33 können die längenverstellbaren Tragbeine 13 des Bewegungssystems 12 kürzer ausgeführt werden, so daß eine geringere Anforderung an deren Knicksteifigkeit und Festigkeit besteht. Der den unteren Öffnungsrand 25 des Doms 24 aufnehmende Halter 27 ist einstückig mit der Plattform 11 ausgeführt, so daß diese eine kegelstumpfförmige Gestalt aufweist.

Die hier ebenfalls vorgesehenen acht Projektoren 23, die insgesamt vier in Umfangsrichtung nebeneinanderliegende, vertikale Abschnitte des Doms 24 überlappend ausleuchten, sind wie in dem Ausführungsbeispiel gemäß Fig. 1 und 2 zu insgesamt vier Projektorpaaren 30 zusammengefaßt, von denen jedes Projektorpaar 30 in einem der nebeneinanderliegenden Projektionsabschnitten mit dem Projektionskegel 31 den unterhalb der Horizontalebene 21 liegenden Dombereich und mit dem Projektionskegel 32 den oberhalb der Horizontalebene 21 liegende Dombereich ausleuchtet. Von jedem Projektorpaar 30 ist der den unteren Dombereich ausleuchtende Projektor 23 oberhalb der Fahrzeugkabine 17 und der den oberen Dombereich ausleuchtende Projektor 23 am Fuße der Fahrzeugkabine 17 angeordnet und an der Plattform 11 befestigt. Auf diese Weise läßt sich ein Teil des von den Projektoren 23 gebildeten Projektionssystems, das relativ schwergesichtig ist, auf der Plattform 11 konzentrieren, was zu einer möglichst niedrigen Schwerpunktslage des vom Bewegungssystem 12 getragenen Teils des Simulators beiträgt.

## Patentansprüche

1. Übungssimulator zum Trainieren von Fahrzeugführern in der Fahrzeugführung, insbesondere von Piloten im Hubschrauberfilegen, mit einer einen Fahrstand (16) tragenden Plattform (11), mit einem Bewegungssystem (12) zur dreidimensionalen Bewegung der Plattform (11), das mehrere, insbesondere sechs, über Gelenke (14) mit drei Freiheitsgraden an der Plattform (11) und an einem Fundament (15) festgelegte, aktiv längenverstellbare Tragbeine (13) umfasst, und mit einem mit der Plattform (11) fest verbundenen, gekrümmten Projektionsschirm (22) zur Darstellung einer Umgebungssicht des Fahrzeugführers, **dadurch gekennzeichnet, dass** der Projektionsschirm (22) von einem kugelabschnittförmigen Dom (24) mit einem krelsbogenabschnittförmigen, vorzugsweise über ca. 210° Umfangswinkel sich erstreckenden, unteren Öffnungsrand (25) gebildet ist, der über die Plattform (11) mit Fahrstand (16) übergestülpt und an dieser befestigt ist und über die Oberkante der Plattform (11) nach unten so weit vorsteht, dass bei minimiertem Vertikalabstand des Augenpunktes (20) des Fahrzeugführers von der Plattform (11) ein gewünschter großer Sichtwinkel (α), vorzugsweise 50° bis 60°, unterhalb einer durch den Augenpunkt (20) verlaufenden Horizontalebene (21) auf dem Dom (24) gegeben ist, und dass der Dom (24) mit seinem unteren Öffnungsrand (25) an einem von der Plattform (11) nach unten wegstrebenden, sich trichter- oder schirmartig aufweitenden Halter (27) befestigt ist, dessen Höhe und Aufweitung so bemessen sind, dass er in keiner Position der bewegten Plattform (11) das Bewegungssystem (12) touchiert.

2. Simulator nach Anspruch 1, **dadurch gekennzeichnet, daß** die vertikale Höhe des Doms (24) mindestens so bemessen ist, daß ein Sichtwinkel (β) auf den Dom (24) von mindestens 40° oberhalb der durch den Augenpunkt (20) verlaufenden Horizontalebene (21) gegeben ist.

3. Simulator nach Anspruch 1 oder 2, **dadurch gekennzeichnet, daß** der Dom (24) bzgl. der Plattform (11) so ausgerichtet ist, daß der Augenpunkt (20) des Fahrzeugführers etwa im Kugelzentrum des Doms (24) liegt.

4. Simulator nach einem der Ansprüche 1 bis 3, **dadurch gekennzeichnet, daß** der Halter (27) von einem an der Plattform (11) befestigten, über die Länge des unteren Öffnungsrandes (25) des Doms (24) sich erstreckenden, kegelstumpfförmigen Kragen (28) gebildet ist.

5. Simulator nach Anspruch 4, **dadurch gekennzeichnet, daß** der Kragen (28) einstückig mit der Plattform (11) ausgebildet ist.

6. Simulator nach Anspruch 4 oder 5, **dadurch gekennzeichnet, daß** der Kragen als Gitter oder Strebenkonstruktion mit in der kegelstumpfförmigen Mantelfläche sich erstreckenden Gitterstreben ausgebildet ist.

7. Simulator nach einem der Ansprüche 1 bis 6, **dadurch gekennzeichnet, daß** das Fundament (15) eine Erhebung (33) aufweist, deren Außendurchmesser kleiner ist als der lichte Durchmesser des unteren Öffnungsrandes (25) des Doms (24), und daß die fundamentseitigen Gelenke (14) der Tragbeine (17) des Bewegungssystems (12) auf der planen Oberfläche (331) der Erhebung (33) festgelegt sind.

8. Simulator nach einem der Ansprüche 1 bis 7, **dadurch gekennzeichnet, daß** zur Darstellung der Umgebungssicht auf dem Dom (24) mindestens zwei Projektoren (23) vorgesehen sind, von denen der eine Projektor (23) den unterhalb der Horizontalebene (21) durch den Augenpunkt (20) liegenden Dombereich und der andere Projektor (23) den oberhalb der Horizontalebene (21) durch den Augenpunkt (20) liegenden Dombereich ausleuchtet.

9. Simulator nach Anspruch 8, **dadurch gekennzeichnet, daß** der den unteren Dombereich ausleuchtende Projektor (23) oberhalb des Fahrstandes (16) und der den oberen Dombereich ausleuchtende Projektor (23) am Fuße des Fahrstandes (16) an der Plattform (11) angeordnet ist.

10. Simulator nach Anspruch 8 oder 9, **dadurch gekennzeichnet, daß** mehrere Projektorpaare (30) so angeordnet sind, daß sie in Umfangsrichtung benachbarte, vertikale Domabschnitte, vorzugsweise überlappend, ausleuchten.

## Claims

1. Training simulator for training vehicle drivers in vehicle guidance, in particular for training pilots to fly helicopters, having a platform (11) which supports a control stand (16), having a movement system (12) for moving the platform (11) in a three-dimensional manner, which movement system comprises a plurality of, in particular six, support legs (13) which are actively length adjustable and attached via articulated joints (14) with three degrees of freedom to the platform (11) and to a base (15), and having a curved projection screen (22) for displaying a vehicle driver's view of the surrounding area, said projection screen being fixedly connected to the platform (11), **characterized in that** the projection screen (22) is implemented by a dome (24) which is in the form of a spherical section and has a lower opening edge (25) in the form of an arc of a circle and extending preferably over an approx. 210° circumferential angle, which dome is located over the platform (11) with the control stand (16) and attached to said platform and protrudes beyond the upper edge of the platform (11) downwards to the extent that in the case of a minimized vertical distance of the eye point (20) of the vehicle driver from the platform (11) a desired large view angle (α), preferably 50° to 60°, is provided on the dome (24) below a horizontal plane (21) which extends through the eye point (20), and that the dome (24) is attached with its lower opening edge (25) to a support (27) which extends downwards away from the platform (11) and becomes wider in the form of a funnel or umbrella, the dimensions of the height and the widened area of said support being such that it does not contact the movement system (12) when the moved platform (11) is in any position.

2. Simulator according to Claim 1, **characterized in that** the vertical height of the dome (24) is dimensioned at least such that a view angle (β) to the dome (24) of at least 40° above the horizontal plane (21) which extends through the eye point (20) is provided.

3. Simulator according to Claim 1 or 2, **characterized in that** the dome (24) is oriented with regard to the platform (11) such that the eye point (20) of the vehicle driver is approximately in the spherical centre of the dome (24).

4. Simulator according to any one of Claims 1 to 3, **characterized in that** the support (27) is implemented by a truncated cone-shaped collar (28) which extends over the length of the lower opening edge (25) of the dome (24) and is attached to the platform (11).

5. Simulator according to Claim 4, **characterized in that** the collar (28) is embodied in one piece with the platform (11).

6. Simulator according to Claim 4 or 5, **characterized in that** the collar is embodied as a grid or strut construction having grid struts which extend in the truncated cone-shaped peripheral surface.

7. Simulator according to any one of Claims 1 to 6, **characterized in that** the base (15) comprises a raised area (33), the outside diameter of which is smaller than the inside diameter of the lower opening edge (25) of the dome (24), and that the base-side articulated joints (14) of the support legs (13) of the movement system (12) are attached to the planar surface (331) of the raised area (33).

8. Simulator according to any one of Claims 1 to 7, **characterized in that** at least two projectors (23) are provided for displaying the view of the surroundings on the dome (24), of which one projector (23) illuminates the dome region lying below the horizontal plane (21) through the eye point (20) and the other projector (23) illuminates the dome region lying above the horizontal plane (21) through the eye point (20).

9. Simulator according to Claim 8, **characterized in that** the projector (23) which illuminates the lower dome region is disposed above the control stand (16) and the projector (23) which illuminates the upper dome region is disposed at the foot of the control stand (16) on the platform (11).

10. Simulator according to Claim 8 or 9, **characterized in that** a plurality of projector pairs (30) are disposed such that they illuminate, preferably in overlapping fashion, vertical dome sections which are adjacent in the circumferential direction.

## Revendications

1. Simulateur d'exercices pour la formation des conducteurs de véhicule dans la conduite des véhicules, notamment des pilotes pour le vol en hélicoptère, comprenant une plate-forme (11) supportant un poste de conduite (16), comprenant un système de mise en mouvement (12) pour la mise en mouvement tridimensionnelle de la plate-forme (11), lequel inclut plusieurs, notamment six jambes porteuses (13), réglables activement en longueur et fixées par le biais d'articulations (14) à trois degrés de liberté à la plate-forme (11) et à une fondation (15), et comprenant un écran de projection (22) incurvé, fixé à demeure avec la plate-forme (11) pour représenter une vue de l'environnement du conducteur du véhicule, **caractérisé en ce que** l'écran de projection (22) est formé par un dôme (24) en forme de calotte sphérique avec un bord d'ouverture (25) inférieur en forme de segment d'arc de cercle qui s'étend de préférence sur un angle inscrit d'environ 210°, lequel est enfilé au-dessus de la plate-forme (11) avec le poste de conduite (16) et est fixé à celle-ci, et lequel dépasse vers le bas au-delà du bord supérieur de la plate-forme (11) suffisamment loin pour qu'en présence d'un écart vertical réduit au minimum entre le point des yeux (20) du conducteur du véhicule et la plate-forme (11), on obtienne un grand angle de vision (α) souhaité, de préférence de 50° à 60°, au-dessous d'un plan horizontal (21) qui s'étend sur le dôme (24) en passant par le point des yeux (20), et **en ce que** le dôme (24) avec son bord d'ouverture (25) inférieur est fixé à un support (27) qui s'élargit en forme d'entonnoir ou de parapluie depuis la plate-forme (11) en s'éloignant vers le bas, dont la hauteur et l'élargissement sont dimensionnés de telle sorte qu'il ne touche le système de mise en mouvement (12) dans aucune position de la plate-forme (11) en mouvement.

2. Simulateur selon la revendication 1, **caractérisé en ce que** la hauteur verticale du dôme (24) est au moins dimensionnée de manière à obtenir un angle de vision (β) sur le dôme (24) au minimum égal à 40° au-dessus du plan horizontal (21) qui passe par le point des yeux (20).

3. Simulateur selon la revendication 1 ou 2, **caractérisé en ce que** le dôme (24) ou la plate-forme (11) est orienté(e) de telle sorte que le point des yeux (20) du conducteur du véhicule se trouve approximativement au centre sphérique du dôme (24).

4. Simulateur selon l'une des revendications 1 à 3, **caractérisé en ce que** le support (27) est formé par une collerette (28) de forme tronconique fixée à la plate-forme (11) et qui s'étend sur la longueur du bord d'ouverture (25) inférieur du dôme (24).

5. Simulateur selon la revendication 4, **caractérisé en ce que** la collerette (28) est formée d'une seule pièce avec la plate-forme (11).

6. Simulateur selon la revendication 4 ou 5, **caractérisé en ce que** la collerette est réalisée sous la forme d'une grille ou d'un treillage avec des montants de treillage qui s'étendent dans la surface d'enveloppe de forme tronconique.

7. Simulateur selon l'une des revendications 1 à 6, **caractérisé en ce que** la fondation (15) présente une élévation (33) dont le diamètre extérieur est plus petit que le diamètre libre du bord d'ouverture (25) inférieur du dôme (24) et **en ce que** les articulations (14) côté fondation des jambes porteuses (13) du système de mise en mouvement (12) sont fixées sur la surface plane (331) de l'élévation (33).

8. Simulateur selon l'une des revendications 1 à 7, **caractérisé en ce qu'**au moins deux projecteurs (23) sont prévus pour la représentation de la vue de l'environnement sur le dôme (24), dont l'un est un projecteur (23) qui illumine la zone du dôme qui se trouve au-dessous du plan horizontal (21) passant par le point des yeux (20) et l'autre est un projecteur (23) qui illumine la zone du dôme qui se trouve au-dessus du plan horizontal (21) passant par le point des yeux (20).

9. Simulateur selon la revendication 8, **caractérisé en ce que** le projecteur (23) qui illumine la zone inférieure du dôme est disposé au-dessus du poste de conduite (16) et le projecteur (23) qui illumine la zone supérieure du dôme est disposé au pied du poste de conduite (16) sur la plate-forme (11).

10. Simulateur selon la revendication 8 ou 9, **caractérisé en ce que** plusieurs paires de projecteurs (30) sont disposées de telle sorte qu'elles illuminent des portions verticales du dôme, voisines dans le sens du pourtour, de préférence qui se chevauchent.
